Europäisches Patentamt

European Patent Office

Office européen des brevets

(19)

(11) Numéro de publication: **0 220 154**
**A1**

(12)

# DEMANDE DE BREVET EUROPEEN

(21) Numéro de dépôt: 86870101.2

(22) Date de dépôt: 09.07.86

(51) Int. Cl.⁴: **B 29 C 41/08**
**B 29 C 33/00, B 29 C 33/38**
**B 29 C 69/02**

(30) Priorité: 15.07.85 LU 86007

(43) Date de publication de la demande:
29.04.87 Bulletin 87/18

(84) Etats contractants désignés:
AT BE CH DE FR GB IT LI LU NL SE

(71) Demandeur: N.V. GECHEM S.A.
12, Avenue de Broqueville
B-1150 Brussels(BE)

(72) Inventeur: Verwilst, Jacques
Damstraat 35
Wetteren(BE)

(72) Inventeur: Jourquin, Lucien
Cooppallaan 156-1
Wetteren(BE)

(74) Mandataire: Callewaert, Jean et al,
Bureau Gevers S.A. rue de Livourne, 7 - Bte 1
B-1050 Bruxelles(BE)

(54) Procédé de préparation, par pistolage, d'une couche façonnée.

(57) Procédé de préparation d'une pièce façonnée en matière plastique souple d'après un modèlé, déterminé suivant lequel on forme d'abord, par pistolage, une couche (6) de la matière plastique contre la surface de formation d'un premier moule (1) correspondant à une configuration déformée suivant des lignes continues de l'empreinte (12) de la surface apparente du modèle et ensuite, après démoulage, on applique cette couche (6) dans un second moule dont la surface de formation coïncide avec la forme de la surface apparente du modèle.

Fig.9.

EP 0 220 154 A1

**"Procédé de préparation, par pistolage, d'une couche façonnée".**

La présente invention est relative à un procédé de préparation d'une pièce façonnée, en matière plastique souple ou pouvant être rendue souple, d'après un modèle déterminé, suivant lequel on forme, par pistolage, une couche de la matière plastique contre une surface de formation d'un moule, cette surface correspondant à une configuration déformée suivant des lignes sensiblement continues de l'empreinte de la surface apparente du modèle susdit, de manière à ce que sensiblement tous les endroits de la surface de ce moule soient facilement accessibles pour le pistolage, cette couche souple ou rendue souple étant ensuite déformée jusqu'à obtenir une pièce façonnée constituée d'une couche de matière plastique dont la surface apparente correspond sensiblement à celle du modèle susdit.

Il s'agit plus particulièrement d'une couche façonnée en matière plastique souple ou pouvant être rendue souple, suivant un modèle déterminé, présentant une forme très accidentée et un aspect de surface variable, tel qu'une garniture de tableau de bord et du panneau de portes pour véhicule automobile, etc.

Actuellement, il existe plusieurs techniques pour la réalisation de telles couches façonnées en matière plastique.

Ainsi, une technique couramment utilisée est celle du thermoformage, suivant laquelle une feuille de matière thermoplastique est chauffée jusqu'au dessus de sa température de ramollissement, et est ensuite déformée dans un moule, correspondant à l'empreinte négative du modèle désiré, soit sous l'effet du vide, soit par...

des moyens mécaniques soit par une combinaison des deux. Cette technique relativement simple présente, toutefois, l'inconvénient de n'être en principe applicable que pour la fabrication d'enveloppes ou revêtements façonnés de forme peu complexe et de grain uniforme. De plus, cette technique est limitée à l'utilisation de matières plastiques ayant un point de ramolissement relativement bas, de sorte que si ces enveloppes ou revêtements façonnés subissent ultérieurement un chauffage à une température de l'ordre de 120°C, l'effet de mémoire risque de provoquer une déformation de ces enveloppes et revêtements avec p.e. comme résultat de se décrocher de leur support sur lequel ils sont appliqués.

Une autre technique généralement utilisée est celle qui est connue sous le nom de "Slush-moulding" et qui consiste à remplir complètement les creux d'un moule en forme de cuvette avec une matière synthétique liquide, tel que les plastisols de P.V.C. Au contact avec les parois chaudes du moule cette matière se fige en formant sur ces parois un film. Le moule est ensuite renversé pour évacuer l'excès en matière synthétique encore liquide et est refroidi pour permettre le démoulage de la peau obtenue. Il s'agit généralement d'une technique relativement encombrante qui, de plus, consomme une quantité d'énergie et qui expose les moules à des chocs thermiques nuisibles.

Une troisième technique est celle du pistolage, qui consiste à pulvériser une matière plastique liquide, diluée ou non dans des solvants,ou des composants liquides qui formeront après réaction in situ un polymère, contre la surface d'un moule, de manière à former ainsi sur cette dernière un film de matière plastique solidifiée.

Cette dernière technique permet en général de remédier à certains des inconvénients des deux techniques décrites ci-dessus, mais n'est toutefois applicable que si tous les endroits de la surface à recouvrir par le film sont facilement accessibles par le jet du pistolet, utilisé pour projeter la matière plastique liquide. Ainsi, il est connu ,en faisant usage d'un moule souple fixé par sa périphérie sur un support rigide dont la forme intérieure correspond à la forme extérieure du moule souple, de retourner ce moule souple pour rendre la face intérieure de ce dernier facilement accessible au pistolage pour former ainsi sur cette face une couche souple de matière plastique et de redresser ensuite ce moule dans sa position initiale correspondant à la forme du support rigide, qui est la forme désirée de cette couche.

Une telle technique, à première vue très simple, ne convient cependant généralement pas pour des moules souples présentant un contre-dépouille, puisque dans un tel cas, il ne sera pratiquement pas possible de redresser le moule dans sa position initiale et donc d'obtenir une couche souple en matière souple présentant exactement la forme désirée. De plus, par suite du retournement et redressement permanent de ce moule souple, celui-ci s'usera très rapidement et ne permettra donc pas de reproduire dans la couche de matière plastique la texture de la surface apparente avec la précision requise. Ainsi, cette technique ne convient généralement pas pour la fabrication d'enveloppes ou revêtements présentant des creux étroits et profonds, comme par exemple dans le cas de certaines garnitures pour tableaux de bord de véhicules automobiles.

Un des buts essentiels de la présente invention consiste à présenter un procédé très simple, qui permet de remédier à cette lacune de la technique de pistolage et qui peut, sans aucun problème, être utilisé pour la préparation de couches façonnées en matière plastique suivant un modèle de pratiquement n'importe quelle forme.

A cet effet, le procédé suivant l'invention consiste à faire usage, pour former la couche de la matière plastique, d'un premier moule dont la surface de formation correspond à ladite configuration déformée suivant des lignes sensiblement continues de l'empreinte de la surface apparente du modèle susdit à démouler ensuite cette couche de la matière plastique et à appliquer cette dernière dans un second moule dont la surface de formation coïncide sensiblement avec la forme de la surface apparente dudit modèle.

Avantageusement, on fait usage d'un premier moule sensiblement rigide,notamment en métal.

Suivant une forme de réalisation particulière, on applique, par pistolage, un mélange d'un polyol et d'un isocyanate sur la surface de formation du premier moule, de manière à réaliser in situ une couche souple de polyuréthanne.

D'autres détails et particularités de l'invention ressortiront de la description donnée ci-après, à titre d'exemples non limitatifs et avec référence aux dessins annexés, de quelques formes de réalisation particulières du procédé suivant l'invention.

La figure 1 est une vue en perspective d'un modèle suivant lequel une couche façonnée en matière plastique est préparée.

Les figures 2 à 6 montrent schématiquement les différentes étapes d'une première forme de réalisation du procédé suivant l'invention.

Les figures 7 à 10 montrent une variante de cette forme de réalisation.

La figure 11 est une représentation schématique d'un dispositif de pistolage à deux composants.

Dans les différentes figures les mêmes chiffres de référence désignent des éléments identiques ou analogues.

L'invention concerne un procédé particulier de préparation, par pistolage, d'une couche façonnée en matière plastique suivant un modèle déterminé et dont la surface extérieure présente sensiblement la même texture, structure ou aspect, que la surface extérieure de ce modèle.

Il s'agit plus particulièrement d'un procédé qui permet en fait d'imiter la forme et la texture extérieures de pièces de formes très variées, à partir de modèles ou prototypes, par l'application de la technique connue en soi du pistolage.

D'une façon générale, le procédé suivant l'invention consiste à appliquer, par pistolage, une couche d'une matière plastique ou des composants formant in situ la matière plastique contre une surface de formation d'un premier moule, formant un moule préliminaire.

Cette matière plastique doit avoir comme propriété de former une couche ou film souple ou pouvant être rendu souple, c'est-à-dire dont la forme peut être modifiée aisément, sans que la superficie dans toutes les directions soit modifiée, par exemple par pliage.

La surface de formation du premier moule correspond à une configuration déformée suivant des lignes sensiblement continues de l'empreinte de la surface apparente du modèle, notamment de l'empreinte négative de la surface extérieure apparente du modèle, de manière à ce que tous les endroits de cette surface soient facilement accessibles pour le jet de pistolage. Ainsi, la déformation peut avantageusement être telle que généralement les parties concaves de l'empreinte négative de la surface extérieure apparente du modèle peuvent rester concaves dans la configuration déformée. Il suffit simplement que toutes les parties soient facilement accessibles pour le pistolage.

Plus particulièrement, il peut donc s'agir d'un développement partiel ou complet de la surface extérieure apparente du modèle.

La couche de matière plastique formée sur cette surface est alors, après démoulage, appliquée dans un second moule, qui constitue un moule de finition et dont la surface de formation coïncide sensiblement avec la forme négative de la surface apparente extérieure du modèle, pour obtenir ainsi une couche façonnée de matière plastique dont la surface extérieure apparente est sensiblement identique à celle du modèle.

Dans la présente description, on désigne, d'une façon générale, par "surface de formation", la surface d'un moule contre laquelle un produit est formé par coulée, pistolage ou tout autre technique connue en soi, de sorte que cette surface de formation constitue l'empreinte négative de la surface de ce produit. L'expression "surface texturée" désigne la surface d'un produit, tel que cuir, présentant une certaine structure ou un dessin en relief ou en creux.

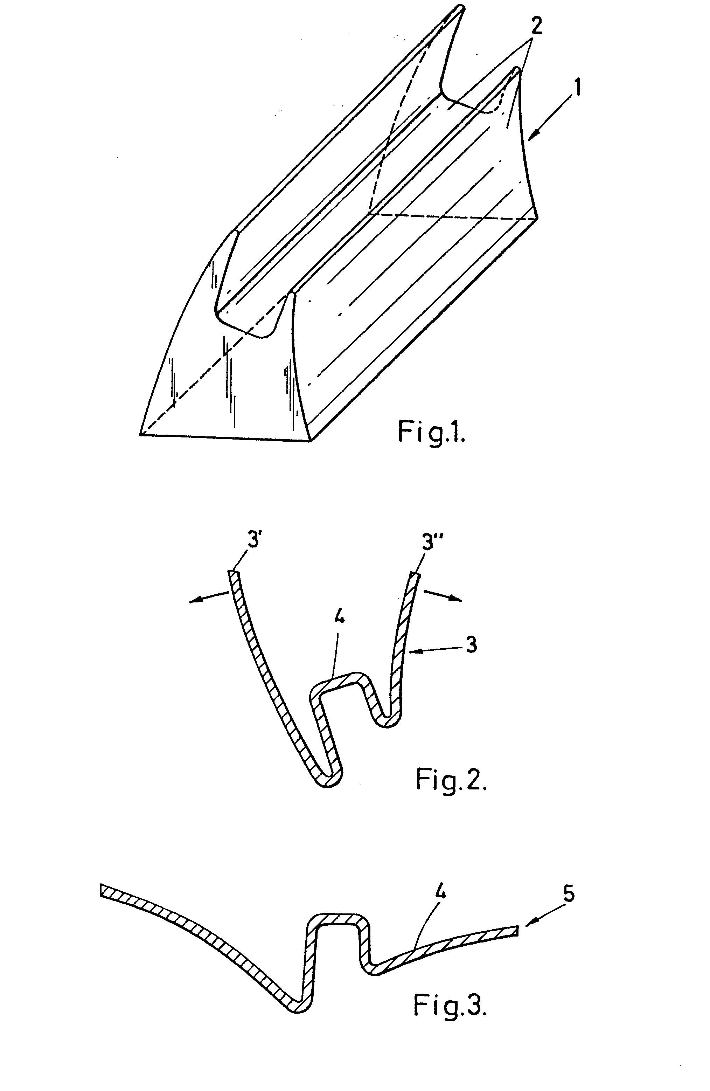

La figure 1 montre, à titre d'exemple, un modèle 1, dont la surface extérieure apparente 2 est texturée ou lisse. Cette surface peut par exemple présenter l'aspect de cuir ou tout simplement être constituée de cuir.

Suivant l'invention on prépare, comme montrée à la figure 2, tout d'abord une pièce intermédiaire 3 à partir du modèle 1, dont la surface intérieure 4 présente l'empreinte négative de la surface extérieure texturée 2 de ce modèle. Cette pièce 3 est constituée d'une feuille en une matière flexible, notamment en un élastomère, façonnée suivant la forme extérieure du modèle.

Ensuite, comme montré à la figure 3, cette feuille est déformée et ce de manière à rendre tous les endroits de la surface intérieure 4 de celle-ci facilement accessibles pour le jet du pistolage.

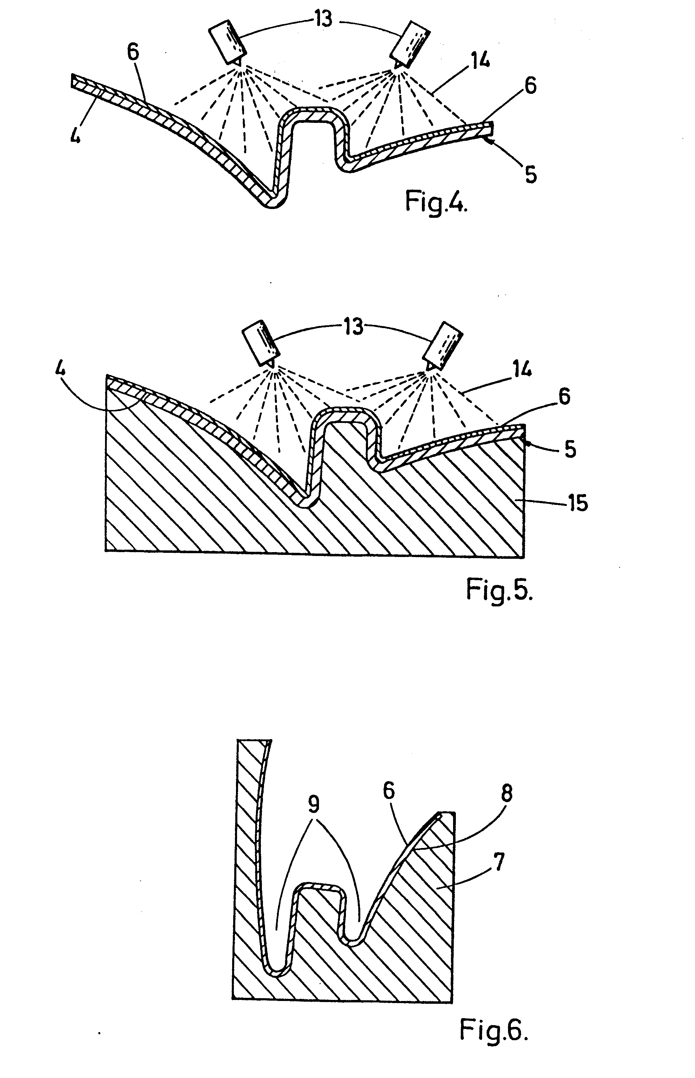

Cette feuille ainsi déformée 5 peut, dans certains cas, être utilisée directement comme premier moule ; par exemple, si cette feuille présente une rigidité suffisante. Ceci a été montré à la figure 4.

Dans l'autre cas, si la rigidité n'est pas suffisante, on place la feuille 5 sur un moule de soutien 15, comme montré à la figure 5.

Si ces conditions sont remplies on peut appliquer, par pistolage, une couche 6 de matière plastique ou de composants formant in situ cette matière plastique contre la surface 4 de la feuille ainsi déformée 5, formant donc la surface de formation du premier moule.

Cette couche souple 6 de matière plastique est alors placée dans un second moule 7, dont la surface de formation 8 coïncide sensiblement avec celle de la forme négative de la surface extérieure apparente 2 du modèle 1, pour obtenir ainsi une couche façonnée de matière plastique dont la surface extérieure apparente est sensiblement identique à celle du modèle (voir figure 6).

Il y a lieu de noter que la surface de formation 8 du second moule 7 ne doit pas nécessairement présenter la texture de la surface extérieure apparente 2 du modèle 1 ; elle peut, par exemple, être parfaitement lisse, puisque la couche de matière plastique 6, formée sur la surface 4 de la feuille déformée 5, présentera déjà cette texture.

L'opération suivante consiste alors à remplir les creux 9 de la couche de matière plastique 6, façonnée dans ce second moule 7, par un rembourrage, qui est de préférence constitué par de la mousse de polyuréthanne ou une matière sensiblement analogue. Le cas échéant, des pièces de renforcement pourraient être noyées dans ce rembourrage. Cette opération de rembourrage est avantageusement effectuée sous pression pendant que la couche façonnée de matière plastique 6 se trouve dans le second moule 7 ; elle n'a toutefois pas été illustrée aux figures, étant donnée qu'il s'agit en fait d'une opération classique, connue en soi.

Cette première forme de réalisation peu coûteuse est idéale pour fabriquer des prototypes ou des petites séries. Généralement, par suite du caractère souple d'un tel moule, la texture de la surface extérieure apparente de la couche en matière plastique formé sur ce premier moule est peu nette et peu précise.

De plus, un tel moule souple s'use assez rapidement.

Ainsi, quoique dans certains cas, plutôt exceptionnels, un premier moule souple pourrait convenir, l'invention vise surtout, par exemple, lorsque ce premier moule devra servir pour la préparation d'un nombre relativement important de couches ou pièces façonnées en matière plastique 6, à utiliser un premier moule en une matière essentiellement rigide, notamment en métal, et ceci par exemple par galvanoplastie.

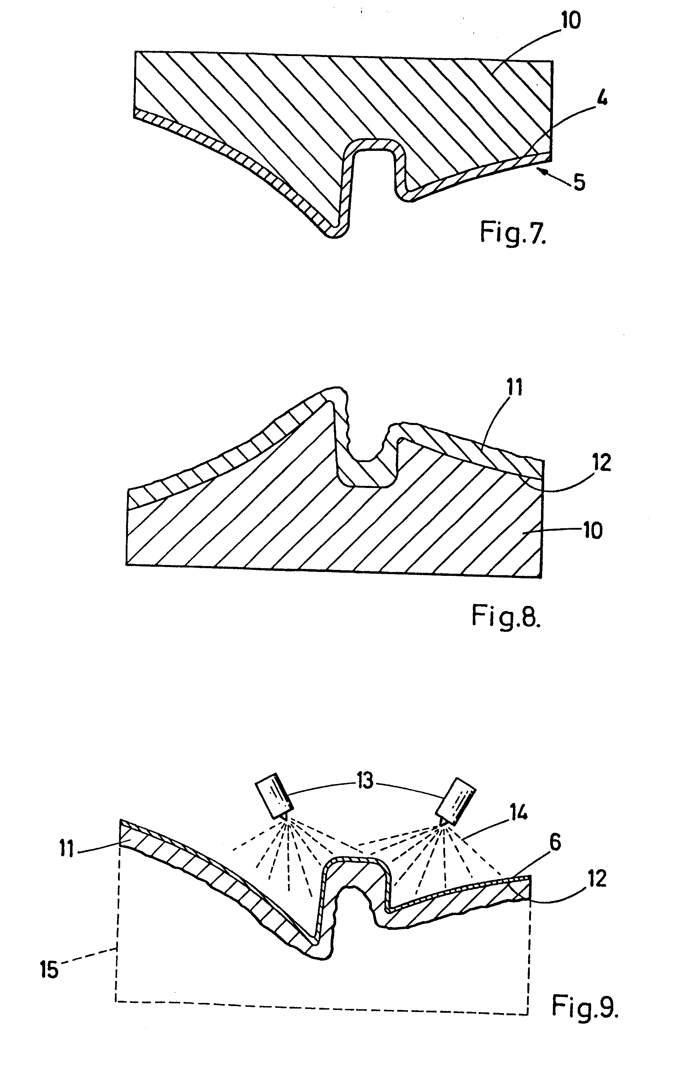

A cet égard, comme montré à la figure 7, on prend une nouvelle empreinte de la surface intérieure 4 de la feuille déformée 5 en formant sur celle-ci un contre-moule 10. Ce contre-moule peut par exemple être obtenu en coulant sur la surface 4 de cette feuille une matière plastique suffisamment liquide pourque celle-ci puisse pénétrer dans la texture de cette surface 4 et former par polymérisation une matière relativement dure et non déformable. Il peut notamment s'agir d'une résine époxy.

Après avoir séparé la feuille 5 du contre-moule 10, on dépose sur la nouvelle empreinte 12, présentée par ce contre-moule, une couche métallique 11 par galvanoplastie. (voir figure 8)

Cette couche métallique 11, d'une épaisseur suffisamment importante, est séparée de ce contre-moule et forme ainsi le premier moule précité en matière durable.

Les opérations suivantes correspondent à celles déjà décrites ci-dessus en rapport avec les figures 4 à 6. Ainsi, sur la surface texturée 12 de ce premier moule en matière durable, qui est donc identique à la surface texturée 4 de la feuille déformée 5, on pulvérise, par projection au moyen de pistolets 13, une matière plastique liquide 14 ou les composants de celle-ci, de manière à former sur cette surface texturée 12 une couche de matière plastique 6 polymérisant ou durcissant à l'air libre, éventuellement par l'apport de calories. (voir figure 9)

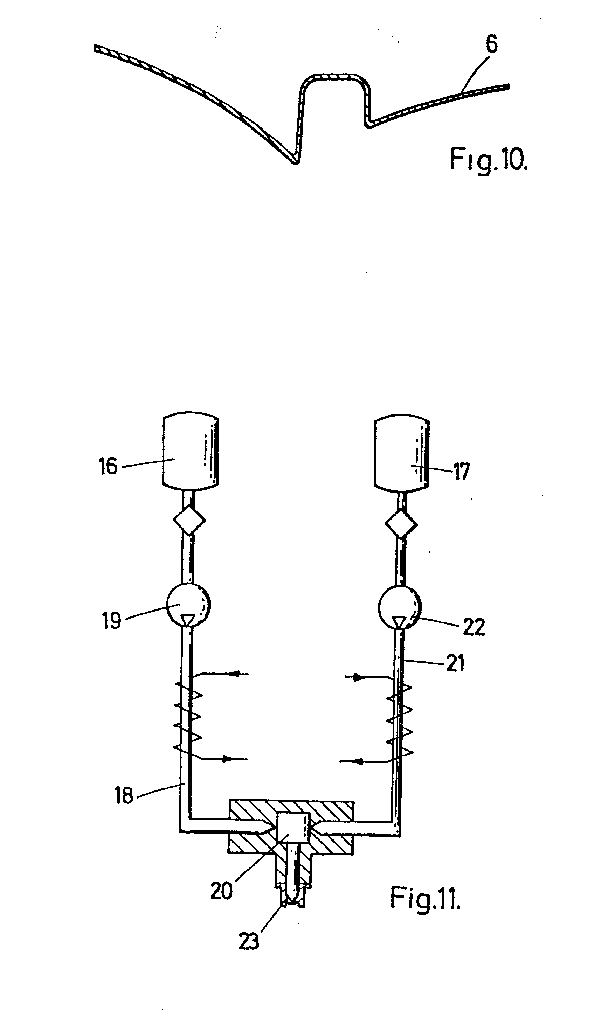

Après durcissement ou polymérisation, cette couche de matière plastique 6 est démoulée, comme montré par la figure 10, et est transferrée au second moule 7 dans lequel elle est pliée contre la surface de formation 8 de ce dernier, de manière à présenter exactement la forme de la surface extérieure 2 du modèle 1.

Si nécessaire, lors du pistolage, la couche métallique 11 peut être posée sur un moule de soutien 15, comme montré en traits interrompus sur la figure 9.

Cette opération est alors suivie de l'opération de rembourrage, comme déjà décrite ci-dessus.

Les moules 7 et 15 peuvent être constitués de la même matière que le contre-moule 10, telle qu'une résine, ou êtré réalisé en plâtre ou encore être formé d'une coquille laminée renforcée éventuellement par une armature.

Pour passer de la forme de la pièce intermédiaire 3 de la figure 2 à la forme partiellement développée de la feuille 5, telle que montrée à la figure 3, on peut utiliser n'importe quel système connu, notamment la technique du vide ou encore des moyens mécaniques exerçant une traction sur les bords 3' et 3" de la pièce 3, comme montré par des flèches.

La pièce intermédiaire 3 est généralement réalisée à base d'un caoutchouc ayant un module d'élasticité inférieur ou égal à 100 MPa, suivant les normes DIN 53423, et une dureté Shore comprise entre Shore A = 23 et Shore D = 45, tandis que l'épaisseur de la feuille, dont est constituée cette pièce, est généralement comprise entre 1 et 50 mm.

Avantageusement, cette épaisseur est comprise entre 3 et 15 mm et la matière, dont est consituée cette pièce, est de préférence à base d'un caoutchouc ayant un modèle d'élasticité inférieur ou égal à 30 MPa et une dureté Shore comprise entre 30 et 85 Shore A.

Etant donné que ces caoutchouc présentent une élasticité non négligeable, il peut, avantageusement, avoir intérêt à les armer par une armature souple présentant un coefficient d'allongement négligeable. Cette armature empêche donc l'allongement de la pièce 3 lors de sa déformation.

Cette pièce intermédiaire 3 peut être préparée par la technique de coulée ou par la technique de pistolage.

Afin d'obtenir une empreinte négative de la surface extérieure apparente 2 du modèle 1, on traite avantageusement cette surface par un agent démoulant avant de forme sur celle-ci la pièce intermédiaire 3.

Le second moule 7 peut, suivant l'invention, être réalisé en au moins deux pièces rigides et mobiles l'une par rapport à l'autre pour permettre ainsi le démoulage facile de la couche façonnée 6 après le rembourrage.

Ci-après sont donnés quelques exemples pratiques de compositions de matières plastiques, aussi bien pour ce qui concerne la préparation de la pièce intermédiaire 3 que la pièce façonnée 6 suivant un modèle déterminé.

## Exemple 1

Cet exemple concerne la préparation d'une composition d'un élastomère de polyuréthanne stable à la lumière, dont le système catalytique a été breveté par la déposante, pouvant être appliqué par la technique de pistolage. Il s'agit d'un élastomère de polyuréthanne qui peut être appliqué par des pistolets pour deux composants, comme représenté à la figure 11.

Le premier composant est par exemple constitué par un polyol et est stocké dans un réservoir 16. L'autre composant, formé par l'isocyanate, est contenu dans un réservoir 17. Le réservoir 16 est, relié par l'intermédiaire d'une conduite 18, sur laquelle est montée une pompe-doseuse 19, à une chambre de mélange 20, tandis que le réservoir 17 est relié par une conduite 21, sur laquelle est montée une pompe-doseuse 22, avec cette même chambre de mélange 20.

Sur cette chambre 20 est alors branchée une tête de projection 23, par laquelle l'isocyanate et le polyol sont pulvérisés en mélange intime pour former ainsi in situ le polyuréthanne correspondant.

### 1) Caractéristiques du polyol (premier composant)

#### Formule (en parties en poids)

| | |
|---|---|
| Polyether-triol obtenu par l'addition d'oxyde de propylène de d'oxyde d'éthylène à de la glycerine, comme initiateur (indice OH : 35 ; teneur en radicaux prim. OH : 80 %) | 100 |
| Glycol éthylénique : | 5 |
| N'N'-dimethylbuthanediamine : | 5 |
| octoate de plomb (33 % Pb métal) : | 0,7 |
| pâte colorante : | 5 |
| | 115,7 |

#### Propriétés

| | |
|---|---|
| Viscosité à 25 °C en MPa.s : | 1170 |
| Viscosité à 45°C en MPa.s | 300 |

Viscosité à 65°C en MPa.s      150

Densité (21°C)      1,02

## 2) Caractéristiques de l'isocyanate (second composant)

### Formule (en parties en poids)

Quasi-prépolymere (100 parties d'isophorondiisocyanate
+ 13,28 parties de glycol dipropylenique
- teneur finale en groupes NCO : 26%) :      67,1

Dimethylstanodineodécanoate :      1

     —————

     68,1

### Propriétés

Viscosité à 25 °C en MPa.s :      1450

Viscosité à 45°C en MPa.s :      350

Viscosité à 65°C en MPa.s :      50

Densité (21°C)      1,07

Rapport $\dfrac{\text{Composé de polyol}}{\text{Composé d'isocyanate}} = \dfrac{115,7}{68,1} = 1,7$

Le temps de démoulage, pour une température du moule de 60°C, était de moins d'une minute.

### 3) Propriétés du produit fini :

                 Méthode d'essai

Allongement à la rupture (%) 230      ASTM D412

Résistance à la traction (MPa) 5,8      ASTM D412

Résistance au déchirement (N/cm) 210      ASTM D624

Shore A           70-75      -

Poids spécifique (g/cm$^3$) : 1,0

### Exemple 2

La composition élastomère utilisée pour la préparation de la pièce intermédiaire 3 est constituée d'un polyuréthanne aromatique également appliqué par pistolage au moyen du dispositif représenté à la figure 10.

## 1. Caractéristiques du polyol (premier composant)

### 1. Formule

| | |
|---|---|
| Triol de polyether du même type que dans l'exemple 1 : | 90 |
| Dabco 33 Lv (diamine triéthylenique; 33% en solution dans DPG) : | 2,25 |
| Butane diole : | 7,9 |
| Pâte colorante : | 5 |
| | 105,15 |

### Propriétés

| | |
|---|---|
| Viscosité à 25°C en MPa.s : | 1060 |
| Viscosité à 45°C en MPa.s : | 320 |
| Densité (21°C) : | 1,02 |

### 2) Caractéristique de l'isocyanate (second composant)

#### Formule

| | |
|---|---|
| isocyanate RMA 200 (Upjohn) : | 43,5 |

#### Propriétés

| | |
|---|---|
| Viscosité à 25°C en MPa.s | 620 |
| Viscosité à 45°C en MPa.s | 126 |
| Densité (21°C) | 1,21 |

$$\text{Rapport} \quad \frac{\text{Composé de polyol}}{\text{Composé d'isocyanate}} = \frac{105,15}{43,5} = 2,42$$

Le temps de démoulage est de moins de 3 minutes pour une température du moule de 60°C.

## 3) Propriétés du produit fini:

| | | Méthode d'essai |
|---|---|---|
| Allongement à la rupture (%): 335 | | ASTM D412 |
| Résistance à la traction (MPa): 4,9 | | ASTM D412 |
| Résistance au déchirement (N/cm): 210 | | ASTM D624 |
| Shore A | 65-70 | — |
| Poids spécifique (g/cm³) | 1,0 | |

## Exemple 3

La pièce intermédiaire 3 est constituée d'un élastomère de polyuréthanne obtenu suivant la technique de coulée.

On fait usage de deux composants, un premier composant à base d'un polyol et un second composant formé d'un prépolymère, qui sont mélangés intimement sous vide, de manière à éviter l'inclusion de bulles d'air. Le mélange ainsi obtenu présente une viscosité relativement importante et peut être appliqué par couches successives sur le modèle.

Le premier composant répond à la formulation suivante :

| | |
|---|---|
| Polyol : ( Dow SA 1550    ) | 53,00 |
| Argile calciné : | 20,00 |
| Silice : | 26,25 |
| Octoate de plomb : | 0,40 |
| phenyl mercurie acétate | 0,035 |
| | 100 |

Le second composant répond à la formulation suivante :

| | |
|---|---|
| DPG (dipropylène glycol) | 18,00 |
| T 80 (toluène diisocyanate) | 82,00 |
| | 100,00 |

$$\text{Rapport} \quad \frac{\text{Composé de polyol}}{\text{Composé d'isocyanate}} = \frac{100}{11,9} = 8,4$$

Propriétés du produit fini :

| | | Méthode d'essai |
|---|---|---|
| Allongement à la rupture (%) : | 160 | ASTM D412 |
| Résistance à la traction (MPa) : | 2,0 | ASTM D412 |
| Résistance au déchirement (N/cm) : | 50 | ASTM D624 |
| Poids spécifique (g/cm³) : | 1,7 | — |

Shore A                                    62

retrait (%)                                0,4

Exemple 4

La pièce intermédiaire 3 est constituée de caoutchouc de silicone du type RTV 700 Cat. B 5 : 100/15 (GE-products)

La technique utilisée pour la préparation de ce caoutchouc est la même que celle utilisée pour préparer le caoutchouc de polyuréthanne suivant l'exemple 3.

| Propriétés | Méthodes d'essai |
|---|---|
| Poids spécifique : 1,4 à 1,5 | - |
| Shore A : 35 | - |
| Allongement (%) : 400 | ASTM  D 412 |
| Résistance à la traction (MPa): 4,1 | ASTM  D 412 |
| Résistance au déchirement (N/cm): 250 | ASTM  D 624 |
| Retrait (%) : 0,3 | - |

Exemple d'armature pour la pièce intermédiaire 3:

1) Tissu de textile en fibres de polyester :

Propriétés:

Elongation (%) :              -12,5 (chaîne)

                             - 13,5 (trame)

Résistance à la traction :     + 1500 N/5 cm (chaîne)

                             + 1400 Newton/5cm (trame)

Poids : 127 gr/m²

2) Tissu en fibres de verre :

Propriétés

Type de verre: Type e , verre à teneur basse en alkali, diamètre : 2 microns

Structure : Type de tissage mock-leno

Epaisseur : 0,41 + 0,05 mm.

Poids : 350 gr/m² + 6%

Allongement: négligeable

Ces armatures sont noyées dans les couches successives d'élastomère, dont est constituée la pièce intermédiaire 3, et permettent de réduire l'allongement de cette dernière et, en outre, d'augmenter sensiblement sa résistance au déchirement.

Les types de polyuréthanne suivant les exemples 1 et 2 conviennent également pour la formation, par pistolage, de la pièce en matière plastique 6 façonnée suivant le modèle 1.

Il va bien entendu de soi que l'invention n'est pas limitée aux formes de réalisation spécifiques décrites ci-dessus et que bien des variantes peuvent être envisagées sans sortir du cadre de l'invention.

C'est ainsi, par exemple, que tous types de matière plastique peuvent convenir pour la réalisation de la pièce façonnée 6, pour autant qu'elle peut être appliquée par pistolage et qu'elle permet d'obtenir un film relativement souple qui peut être démoulé rapidement et positionné correctement dans le second moule de finition 7.

Par ailleurs, on peut également envisager l'utilisation d'un premier moule obtenu par d'autres moyens que dans les exemples spécifiques donnés ci-dessus. Il faut seulement que ce moule présente l'empreinte négative de la surface apparente extérieure du modèle et que sa surface de formation, sur laquelle le film ou la pellicule devant constituer la pièce façonnée correspondant au modèle présente la même surface que la surface apparente du modèle, c'est-à-dire correspond en quelque sorte au développement partiel ou total de cette surface.

## REVENDICATIONS.

1. Procédé de préparation d'une pièce façonnée, en matière plastique souple ou pouvant être rendue souple, d'après un modèle déterminé, suivant lequel on forme, par pistolage, une couche de la matière plastique contre une surface de formation d'un moule, cette surface correspondant à une configuration déformée suivant des lignes sensiblement continues de l'empreinte de la surface apparente du modèle susdit, de manière à ce que sensiblement tous les endroits de la surface de ce moule soient facilement accessibles pour le pistolage, cette couche souple ou rendue souple étant ensuite déformée jusqu'à obtenir une pièce façonnée constituée d'une couche de matière plastique dont la surface apparente correspond sensiblement à celle du modèle susdit, ce procédé étant caractérisé en ce que l'on fait usage, pour former la couche de la matière plastique, d'un premier moule dont la surface de formation correspond à ladite configuration déformée suivant des lignes sensiblement continues de l'empreinte de la surface apparente du modèle susdit à ce qu'ensuite on démoule cette couche de la matière plastique et à ce qu'on applique cette dernière dans un second moule dont la surface de formation coïncide sensiblement avec la forme de la surface apparente dudit modèle.

2. Procédé suivant la revendication 1, caractérisé en ce qu'on fait usage d'un premier moule dont la surface de formation correspond à une configuration déformée suivant des lignes sensiblement continues de l'empreinte négative de la surface extérieure apparente du modèle susdit.

3. Procédé suivant la revendication 1 ou 2, caractérisé en ce que l'on utilise un premier moule réalisé en une matière sensiblement rigide, notamment en métal.

4. Procédé suivant la revendication 3, caractérisé en ce qu'on fait usage d'un premier moule obtenu par galvanoplastie.

5. Procédé suivant l'une quelconque des revendications 1 à 4, caractérisé en ce que l'on utilise un second moule sensiblement rigide réalisé essentiellement en plusieurs parties séparables.

6. Procédé suivant l'une quelconque des revendications 1 à 5, caractérisé en ce qu'on applique par pistolage un mélange d'un polyol et d'un isocyanate sur la surface de formation du premier moule, de manière à réaliser in situ une couche souple de polyuréthanne.

7. Procédé suivant la revendication 1 ou 2, caractérisé en ce qu'on fait usage d'un premier moule formé à partir du modèle précité et réalisé en une couche d'une matière flexible, cette couche étant déformée, de manière à rendre tous les endroits de sa surface de formation facilement accessibles pour le pistolage.

8. Procédé suivant l'une quelconques des revendications 1, 2 ou 7,, caractérisé en ce qu'on fait usage d'un premier moule réalisé en une matière plastique souple armée par un tissu à faible coefficient d'allongement.

9. Procédé suivant la revendication 8, caractérisé en ce qu'on utilise, comme armature pour la matière plastique, un tissu, treillis ou non tissé en fibres textiles, notamment en polyester, ou en fibres de verre.

10. Procédé suivant l'une quelconque des revendications 1, 2, 7 à 9, caractérisé en ce qu'on fait usage d'un moule de soutien rigide pour le premier moule précité, notamment réalisé en plâtre, en une résine ou formé d'une coquille laminée renforcée éventuellement par une armature.

11. Procédé suivant l'une quelconque des revendication 1, 2, 7 à 10, caractérisé en ce qu'on fait usage d'un premier moule d'une épaisseur comprise entre 1 et 50 mm et réalisé à base d'un caoutchouc ayant un module d'elasticité inférieur ou égal à 100 MPa, suivant les normes DIN 53423, et une dureté Shore comprise entre un Shore A de 23 et un Shore D de 45.

12. Procédé suivant la revendication 11, caractérisé en ce qu'on fait usage d'un premier moule d'une épaisseur comprise entre 3 et 15 mm et réalisé à base d'un caoutchouc ayant un module d'elasticité inférieur ou égal à 30 MPa et une dureté Shore comprise entre 30 et 85 Shore A.

1/4

0220154

Fig.1.

Fig.2.

Fig.3.

Fig.4.

Fig.5.

Fig.6.

0220154

Fig.7.

Fig.8.

Fig.9.

0220154

Fig.10.

Fig.11.

Office européen
des brevets

**RAPPORT DE RECHERCHE EUROPEENNE**

Numero de la demande

EP 86 87 0101

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-3 576 930 (L.H. WATTERS et al.) <br> * En entier * | 1,2,6 | B 29 C 41/08 <br> B 29 C 33/00 <br> B 29 C 33/38 <br> B 29 C 69/02 |
| | --- | | |
| A | FR-A-1 418 114 (RHONE-POULENC) <br> * En entier * | 8,9 | |
| | --- | | |
| A | US-A-3 428 725 (J. DELMONTE et al.) <br> * En entier * | 11,12 | |
| | --- | | |
| A | GB-A-1 066 440 (DOLYMER CORP.) | | |
| | --- | | |
| A | US-A-4 098 856 (C.M. ROSENAU) | | |
| | ----- | | |

| | | | DOMAINES TECHNIQUES RECHERCHES (Int. Cl.4) |
|---|---|---|---|
| | | | B 29 C |

Le présent rapport de recherche a été établi pour toutes les revendications

| Lieu de la recherche | Date d'achèvement de la recherche | Examinateur |
|---|---|---|
| LA HAYE | 22-01-1987 | SZAMOCKI G.J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant

OEB Form 1503 03 82